# EUROPEAN PATENT APPLICATION

(11) **EP 4 660 351 A1**
(43) Date of publication of application: **10.12.2025**
(21) Application number: 24749897.5
(22) Date of filing: 12.01.2024
(51) Int. Cl.: C25B 11/032, C25B 9/23, C25B 11/065, H01M 4/88, H01M 4/96, H01M 8/10

(54) **GAS DIFFUSION LAYER MANUFACTURING METHOD, CATHODE, ION EXCHANGE FILM-ELECTRODE ASSEMBLY, AND SOLID ELECTROLYTE ELECTROLYSIS DEVICE**

(30) Priority: 01.02.2023 JP 2023014139; 11.07.2023 JP 2023113471
(71) Applicant: Idemitsu Kosan Co.,Ltd., Tokyo 100-8321 (JP)
(72) Inventor: KANEKO Hiroyuki, Tokyo 100-8321 (JP); JIA Qingxin, Tokyo 100-8321 (JP)
(74) Representative: Gille Hrabal Partnerschaftsgesellschaft mbB Patentanwälte
(86) International application number: PCT/JP2024/000517
(87) International publication number: WO 2024/161942

(57) **Abstract**

Provided is a method of producing a gas diffusion layer (10) including: a carbon fiber layer (10a) including a carbon fiber; and a porous layer (10c) including a conductive substance and a binder resin, the method including applying a conductive substance (P) from a surface (10b) side of the carbon fiber layer (10a) of a laminate including the carbon fiber layer (10a) and the porous layer (10c) by a spraying method or a vapor phase method. The production method can produce a gas diffusion layer having high electrolysis activity.

## Description

### Technical Field

The technology of the present disclosure relates to a method of producing a gas diffusion layer, a cathode, an ion exchange membrane-electrode assembly, and a solid electrolyte type electrolysis device.

### Background Art

Carbon dioxide is emitted when energy is extracted from fossil fuel and the like. An increase in concentration of carbon dioxide in the atmosphere is said to be one of the causes for global warming. Carbon dioxide is an extremely stable substance, and hence there have hitherto been few ways to utilize carbon dioxide. However, in an era when global warming is becoming more serious, there has been a demand for a new technology for converting carbon dioxide into another substance to recycle the substance as a resource. For example, a carbon dioxide reduction device capable of directly reducing carbon dioxide in a gas phase is being developed.

Among the carbon dioxide reduction devices, a polymer electrolyte type electrolysis device utilizing a polymer electrolyte is attracting attention because carbon dioxide in a gas phase can be directly reduced and the movement resistance of an ion can be sufficiently reduced by using a polymer electrolyte in a thin film shape. In general, a cathode for carbon dioxide reduction has a structure in which a catalyst layer containing a catalyst is laminated on a gas diffusion layer. For example, a porous material having conductivity is generally used for the gas diffusion layer to send carbon dioxide to the catalyst layer, and various investigations have been made on an improvement in conductivity, gas diffusivity, or the like.

For example, in PTL 1, there has been proposed a gas diffusion electrode including a carbon fiber, carbon powder, and a fluororesin containing a hydrophilic organic solvent serving as a binding material. In this method, there is a disclosure of a process including applying a mixture to the carbon fiber by using a doctor blade method, and then immersing the electrode in water for solidification of the resin and formation of a pore.

In addition, in PTL 2, there is a disclosure of a method involving forming a mixture containing a carbon fiber, carbon powder, and a thermosetting resin into a sheet, and thermally curing the mixture to provide a gas diffusion layer.

Further, in PTL 3, there is a disclosure of an electrode for gas diffusion for a fuel cell improved in conductivity by forming a metal film on a conductive porous body such as a carbon fiber through sputtering.

### Citation List

### Patent Literature

PTL 1: JP 11-31515 A
PTL 2: JP 2010-15908 A
PTL 3: JP 2007-095586 A

### Summary of Invention

### Technical Problem

However, in the doctor blade method disclosed in PTL 1, the application amount cannot be controlled because an excessive amount of the mixture is applied to the carbon fiber. Accordingly, it is difficult to secure an air gap required for gas diffusion. In addition, there is a problem in that there occurs such an adverse effect that a conductive material adheres to the surface of the gas diffusion layer on a side on which the catalyst layer is laminated, to act as an active site of an unintended reaction (side reaction). In addition, there are also problems in that a uniform and large-area gas diffusion layer and a uniform and large-area electrode are difficult to produce, and that there are a large number of back-end steps after the application and hence the production cost is liable to be increased.

In the method disclosed in PTL 2, the thermosetting resin and the thermal curing process each require relatively high cost, and structure control of a product by thermal curing is difficult. Accordingly, there is a problem in that control of physical properties is difficult. In addition, as with PTL 1, there is also a problem in that a sufficient amount of pores for gas diffusion are hardly obtained.

In the invention disclosed in PTL 3, when a metal is sputtered only on a gas diffusion layer, as with the cause of the problem in PTL 1, a metal particle may spread around to a catalyst layer side and act as another catalyst to cause a reaction different from a CO₂ reduction reaction (e.g., a H₂ generation reaction by water reduction). Accordingly, there has been a problem in that the invention cannot be applied to an electrolysis cell for CO₂ reduction.

The technology of the present disclosure has been made in view of the above-mentioned circumstances, and an object of the technology of the present disclosure is to provide a method of producing a gas diffusion layer having high electrolysis activity, a cathode including the gas diffusion layer, an ion exchange membrane-electrode assembly, and a solid electrolyte type electrolysis device in order to solve the above-mentioned problems.

### Solution to Problem

<1> A method of producing a gas diffusion layer including: a carbon fiber layer including a carbon fiber; and a porous layer including a conductive substance 1 and a binder resin,
   the method including applying a conductive substance 2 from a surface side of the carbon fiber layer of a laminate including the carbon fiber layer and the porous layer by a spraying method or a vapor phase method.
<2> The method of producing a gas diffusion layer according to Item <1>, wherein the porous layer has a porosity of from 10% to 60% and an average pore diameter of from 10 nm to 500 nm.
<3> The method of producing a gas diffusion layer according to Item <1> or <2>, wherein the conductive substance 1 and the conductive substance 2 are each independently one or more selected from the group consisting of: a carbon material; and a metal.
<4> The method of producing a gas diffusion layer according to any one of Items <1> to <3>, wherein the method includes spraying a mixed solution containing the conductive substance 2 and the binder resin from the surface side of the carbon fiber layer.
<5> The method of producing a gas diffusion layer according to Item <4>, wherein the spraying the mixed solution is performed so that a total amount of the conductive substance 2 and the binder resin in the mixed solution becomes from 0.05 mg/cm² to 2 mg/cm².
<6> The method of producing a gas diffusion layer according to any one of Items <1> to <3>, wherein the applying the conductive substance 2 from the surface side of the carbon fiber layer is performed by vapor deposition or sputtering.
<7> The method of producing a gas diffusion layer according to Item <6>, wherein an application amount of the conductive substance 2 is from 0.5 µg/cm² to 5 µg/cm².
<8> A cathode, including:
   a gas diffusion layer produced by the method of producing a gas diffusion layer of any one of Items <1> to <7>, the gas diffusion layer including: a carbon fiber layer including a conductive substance 2 and a carbon fiber, part of the carbon fiber being covered with the conductive substance 2; and a porous layer including a conductive substance 1 and a binder resin; and
   a catalyst layer arranged on a porous layer side of the gas diffusion layer.
<9> A cathode, including:
   a gas diffusion layer including:
      a carbon fiber layer including a conductive substance 2 and a carbon fiber, part of the carbon fiber being covered with the conductive substance 2, the conductive substance 2 being present in the carbon fiber layer from a surface thereof to a position of 60% or more thereof in a depth direction; and
      a porous layer including a conductive substance 1 and a binder resin, the porous layer having a porosity of from 10% to 60% and an average pore diameter of from 10 nm to 500 nm; and
   a catalyst layer arranged on a porous layer side of the gas diffusion layer.
<10> The cathode according to Item <8> or <9>,
   wherein the carbon fiber layer further includes a binder resin, and
   wherein a supported amount of the conductive substance 2 and the binder resin is from 0.05 mg/cm² to 2 mg/cm².
<11> The cathode according to any one of Items <8> to <10>, wherein the conductive substance 1 and the conductive substance 2 are each independently one or more selected from the group consisting of: a carbon material; and a metal.
<12> An ion exchange membrane-electrode assembly, including:
   the cathode of any one of Items <8> to <11>;
   a solid electrolyte; and
   an anode.
<13> The ion exchange membrane-electrode assembly according to Item <12>, wherein the solid electrolyte is an anion exchange membrane.
<14> A solid electrolyte type electrolysis device, including:
   the cathode of any one of Items <8> to <11>;
   an anode forming a pair of electrodes with the cathode;
   a solid electrolyte interposed between the cathode and the anode in a contact state; and
   a voltage application unit configured to apply a voltage between the cathode and the anode.
<15> The solid electrolyte type electrolysis device according to Item <14>, wherein the solid electrolyte is an anion exchange membrane.

### Advantageous Effects of Invention

The technology of the present disclosure can provide the method of producing a gas diffusion layer having high electrolysis activity, the cathode including the gas diffusion layer, the ion exchange membrane-electrode assembly, and the solid electrolyte type electrolysis device.

### Brief Description of Drawings

[Fig. 1] Fig. 1 is a schematic view of an ion exchange membrane-electrode assembly to be suitably used in an embodiment of the present disclosure.
[Fig. 2] Fig. 2 is a schematic view of a laminate of a gas diffusion layer and a catalyst layer.
[Fig. 3] Fig. 3 is a schematic view for illustrating an example of a method of producing a gas diffusion layer to be suitably used in an embodiment of the present disclosure.
[Fig. 4] Fig. 4 is a schematic view of a solid electrolyte type electrolysis device to be suitably used in an embodiment of the present disclosure.
[Fig. 5] Fig. 5 is a cross-sectional electron micrograph of a carbon fiber of a gas diffusion layer of Example 1.
[Fig. 6] Fig. 6 is a cross-sectional electron micrograph of a carbon fiber of a gas diffusion layer of Example 2.
[Fig. 7] Fig. 7 is a cross-sectional electron micrograph of a carbon fiber of a gas diffusion layer of Comparative Example 2.
[Fig. 8] Fig. 8 shows the distribution in a depth direction of a detected count ratio of Ag/C fluorescent X-rays in the vicinity of an interface between a carbon fiber layer and a porous layer in the gas diffusion layer of Example 1.
[Fig. 9] Fig. 9 shows the distribution in a depth direction of a detected count ratio of S/C fluorescent X-rays in the vicinity of an interface between a carbon fiber layer and a porous layer in the gas diffusion layer of Example 2.

### Description of Embodiments

The upper limit values and lower limit values of numerical ranges described herein may be freely combined. For example, when the range of "from A to B" and the range of "from C to D" are described as numerical ranges, the numerical range of "from A to D" and the numerical range of "from C to B" are also included in the scope of the present disclosure.

In addition, the numerical range of "from a lower limit value to an upper limit value" described herein means that a physical property value is the lower limit value or more and the upper limit value or less unless otherwise stated.

### <Method of producing Gas Diffusion Layer>

A method of producing a gas diffusion layer according to an embodiment of the present disclosure is a method of producing a gas diffusion layer including: a carbon fiber layer including a carbon fiber; and a porous layer including a conductive substance 1 and a binder resin, the method including applying a conductive substance 2 from a surface side of the carbon fiber layer of a laminate including the carbon fiber layer and the porous layer by a spraying method or a vapor phase method.

A gas diffusion layer to be produced by the method of producing a gas diffusion layer according to this embodiment may be applied to, for example, a water electrolysis device, or a gas diffusion electrode for a fuel cell or an air cell in addition to a carbon dioxide reduction electrolysis device. However, a method of producing a gas diffusion layer in the carbon dioxide reduction electrolysis device is mainly described herein.

First, the structure of the gas diffusion layer is described.

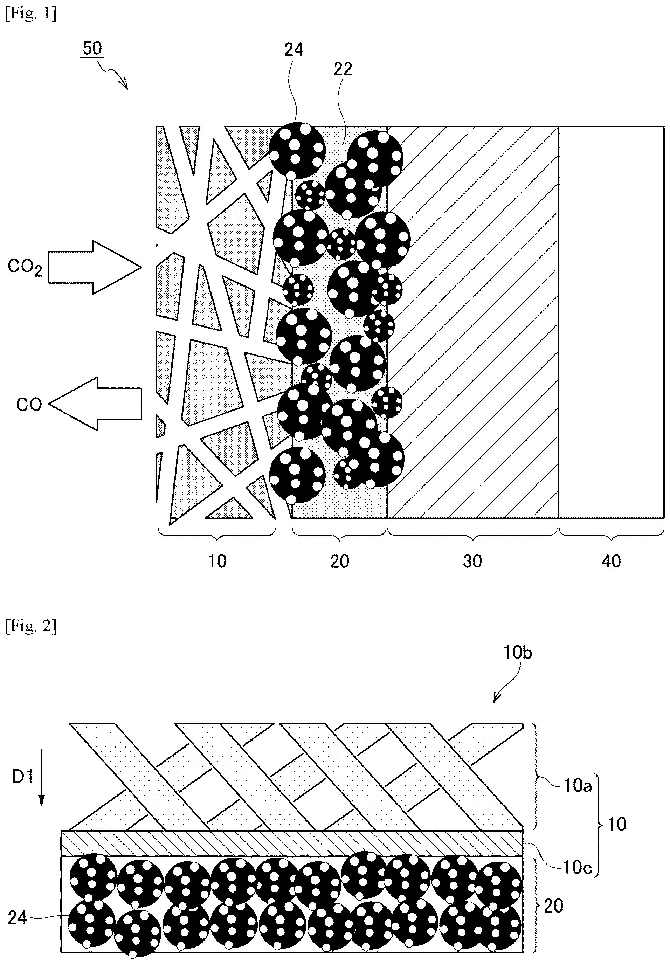

A schematic view of an ion exchange membrane-electrode assembly to be suitably used in an embodiment of the present disclosure is illustrated in Fig. 1. In Fig. 1, an ion exchange membrane-electrode assembly 50 including a gas diffusion layer 10, a catalyst layer 20, a solid electrolyte 30, and an anode 40 is illustrated. Details of the ion exchange membrane-electrode assembly 50 are described later.

As illustrated in Fig. 1, the gas diffusion layer 10 is adjacent to the catalyst layer 20, and takes in carbon dioxide (CO₂) from the outside air to supply the carbon dioxide (CO₂) to the catalyst layer 20.

Fig. 2 is a schematic view of a laminate of the gas diffusion layer 10 and the catalyst layer 20. The gas diffusion layer 10 includes a carbon fiber layer 10a and a porous layer 10c. The catalyst layer 20 includes a catalyst 24, and is adjacent to the gas diffusion layer 10. Specifically, the catalyst layer 20 is adjacent to the porous layer 10c. In Fig. 2, the depth direction of the carbon fiber layer 10a when viewed from a surface 10b of the carbon fiber layer 10a is indicated by the arrow D1. The depth direction of the carbon fiber layer 10a may also be referred to as "lamination direction of the gas diffusion layer 10 and the catalyst layer 20" or "thickness direction of the carbon fiber layer 10a."

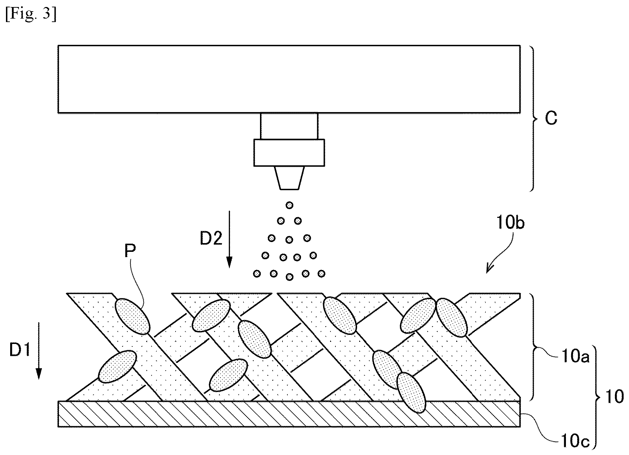

Fig. 3 is a schematic view for illustrating an example of a method of producing a gas diffusion layer to be suitably used in an embodiment of the present disclosure. Such a manner that, in the gas diffusion layer 10 that is a laminate including the carbon fiber layer 10a and the porous layer 10c, a conductive substance P (conductive substance 2) is applied from an application device C to the surface 10b of the carbon fiber layer 10a by a spraying method or a vapor phase method, and the conductive substance P (conductive substance 2) adheres to the carbon fiber layer 10a in the depth direction D1 is illustrated in Fig. 3.

In the method of producing a gas diffusion layer to be suitably used in this embodiment, the phrase "the conductive substance 2 is applied from the surface side of the carbon fiber layer by a spraying method or a vapor phase method" means that, in Fig. 3, the conductive substance P (conductive substance 2) is applied from the application device C toward the surface 10b of the carbon fiber layer 10a, and that the conductive substance P (conductive substance 2) is applied to the inside of the carbon fiber layer 10a in the depth direction D1 in addition to the surface 10b of the carbon fiber layer 10a. Specifically, the conductive substance 2 may be applied in the depth direction D1 from the surface 10b to a position of 60% or more of the thickness of the carbon fiber layer.

In Fig. 3, an application direction D2 of the conductive substance P (conductive substance 2) is shown as being vertical to the surface 10b of the carbon fiber layer 10a. However, the application direction D2 is not necessarily required to be vertical, and the conductive substance P (conductive substance 2) may be applied to the surface 10b at an acute angle or an obtuse angle.

When the carbon fiber layer is, for example, a hexahedral flat plate, all six surfaces of the carbon fiber layer are each a surface of the carbon fiber layer. However, in the method of producing a gas diffusion layer to be suitably used in this embodiment, the carbon fiber layer 10a adjacent to the porous layer 10c is used. The surface of the carbon fiber layer 10a adjacent to the porous layer 10c is free of contact with the conductive substance P (conductive substance 2) applied from the application device C.

Accordingly, the term "surface of the carbon fiber layer" in this embodiment may also be referred to as "exposed surface of the carbon fiber layer." Further, a surface having a larger area among the surfaces of the carbon fiber layer is particularly regarded as the "surface of the carbon fiber layer" in the method of producing a gas diffusion layer according to this embodiment. That is, in Fig. 3, the surface 10b of the carbon fiber layer 10a is mainly referred to as "surface of the carbon fiber layer." However, such a situation that the conductive substance P (conductive substance 2) applied from the application device C enters the carbon fiber layer 10a on a side surface side thereof to adhere to a surface of the carbon fiber layer 10a on the side surface side thereof and an inside thereof is not excluded.

In general, the carbon fiber layer is a porous layer having a structure in which a carbon fiber extending in a network shape in a plane direction is laminated in a direction vertical to the plane. Accordingly, the carbon fiber layer has low electric conductivity in a vertical direction (the same direction as and a reverse direction to the depth direction D1 in Fig. 2) and is liable to have relatively high electrical resistance to cause a decrease in electrolysis efficiency due to a voltage drop at the time of electrolysis. A potential drop caused by the resistance is proportional to a current density, and hence the decrease in efficiency particularly significantly occurs when a large current density is applied. The problem often occurs in the same manner in water electrolysis and a fuel cell or an air cell as well as CO₂ electrolysis.

In view of the foregoing, the gas diffusion electrode often uses a gas diffusion layer obtained by mixing carbon powder having high conductivity (amorphous carbon; carbon black) in addition to a carbon base material. However, as described for PTLs 1 to 3, in the related-art conductivity impartment method, it has been difficult to secure an air gap required for gas diffusion. In addition, such an adverse effect that a conductive material adheres to the surface of the gas diffusion layer on a side on which a catalyst layer is laminated, to act as an active site of an unintended reaction (side reaction) has occurred in some cases.

This is probably because, when a surface of the gas diffusion layer is subjected to solid coating by a doctor blade method as described in PTL 1 or when the gas diffusion layer is immersed in a solution containing a conductive substance, almost the entire surface of the carbon fiber is covered with the conductive substance to increase the coating thickness. Accordingly, in the gas diffusion layer obtained by the related-art conductivity impartment method, the hydrophobicity derived from the carbon fiber is impaired. In addition, the network of the carbon fiber is covered with a coating film having a large coating thickness, and hence the gas diffusivity is impaired.

In contrast, in the method of producing a gas diffusion layer according to this embodiment, a gas diffusion layer having high conductivity in the depth direction, high hydrophobicity, and high electrolysis activity can be produced.

When the conductive substance 2 is applied from the surface side of the carbon fiber layer by a spraying method or a vapor phase method, the conductive substance 2 can be caused to adhere to part of the surface of the carbon fiber. Accordingly, it is conceived that the hydrophobicity of the carbon fiber can be maintained, and a gas diffusion layer having high hydrophobicity can be obtained.

In addition, it is conceived that a gas diffusion layer having high conductivity in the depth direction can be obtained because the conductive substance 2 applied from the surface side of the carbon fiber layer reaches the surface of the carbon fiber in the inside of the carbon fiber layer in the depth direction through a hole of the carbon fiber layer.

Further, it is conceived that the coating thickness of the conductive substance 2 on the surface of the carbon fiber can be reduced, and hence the gas diffusivity can be maintained.

In addition, when the gas diffusion layer has high hydrophobicity, at the time of the use of the gas diffusion layer in an electrolysis device containing an electrolyte solution, infiltration of the gas diffusion layer by the electrolyte solution leaking through the catalyst layer can be prevented, and hence the supply of CO₂ to the catalyst layer is hardly impaired.

Accordingly, it is conceived that a CO₂ reduction reaction in the catalyst layer can be improved, and hence the electrolysis activity can be increased.

A method of applying the conductive substance 2 is more specifically described below.

### [Method of applying Conductive Substance 2]

In the method of producing a gas diffusion layer according to this embodiment, the conductive substance 2 is applied from the surface side of the carbon fiber layer by the spraying method or the vapor phase method.

When the conductive substance 2 is applied by the spraying method or the vapor phase method, while a porous structure formed by the carbon fiber is maintained, the electric conductivity of the carbon fiber layer can be improved by a simple and efficient method without any adverse effect on the catalyst layer. A fine conductive substance particle having a size of a micrometer scale or smaller can be sequentially deposited on the carbon fiber by the application using the spraying method or the vapor phase method. Accordingly, the supported amount of the conductive substance 2 on the carbon fiber is easily controlled, and a micrometer-scale pore of the carbon fiber is less liable to be blocked. In addition, the same device as the device used in the production process for the catalyst layer may be used, and hence the production cost can be suppressed.

The component applied by the spraying method or the vapor phase method only needs to contain the conductive substance 2, and may be a mixture containing the conductive substance 2, a binder resin, a solvent, and the like, or may be only the conductive substance 2.

Examples of the method of applying the conductive substance 2 include: a spraying method (also referred to as "spray method") including spraying the conductive substance 2 serving as the spraying method; and a vapor deposition or sputtering method including applying the conductive substance 2 by vapor deposition or sputtering serving as the vapor phase method.

### (Conductive Substance 2)

For example, a carbon material and a metal may each be used as the conductive substance 2.

Examples of the carbon material include carbons, such as carbon black (e.g., furnace black, acetylene black, ketjen black, or medium thermal carbon black), activated carbon, graphite, a carbon nanotube, a carbon nanofiber, a carbon nanohorn, a graphene nanoplatelet, and nanoporous carbon. Among them, carbon black is preferred from the viewpoints of a small primary particle diameter and low material cost.

Examples of the metal include silver, copper, aluminum, nickel, iron, and indium. Among them, silver is preferred from the viewpoints of high stability and high conductivity.

The above-mentioned components may be used alone or in combination thereof for the conductive substance 2.

From the viewpoint of applying the conductive substance 2 to the carbon fiber layer by spraying more efficiently, the conductive substance 2 is preferably particulate. The primary particle diameter of the conductive substance particle is preferably from 10 nm to 100 nm, more preferably from 10 nm to 50 nm. The primary particle diameter of the conductive substance particle may be measured with a transmission electron microscope.

From the same viewpoint, the secondary particle diameter (particle diameter of an aggregate) of the conductive substance particle is preferably small.

### (Binder Resin)

The binder resin is a component for causing the conductive substance 2 to adhere to the carbon fiber, and an ionomer is preferably used. In addition, in order to prevent the conductivity of the gas diffusion layer from being impaired, the ionomer is preferably conductive, and is more preferably a polymer electrolyte. The polymer electrolyte is still more preferably an ion exchange resin. The ion exchange resin may be a cation exchange resin or an anion exchange resin, but is preferably an anion exchange resin.

Particularly when the anion exchange resin is used, the anion exchange resin itself has a carbon dioxide adsorption ability, and the electrolysis efficiency of carbon dioxide can be greatly improved together with an improvement in ease of ion transfer in the ion exchange resin.

Examples of the cation exchange resin include a fluororesin having a sulfone group, and a styrene-divinylbenzene copolymer having a sulfone group. In addition, a commercially available product may be used, and examples thereof include Nafion (manufactured by The Chemours Company), Aquivion (manufactured by Solvay Specialty Polymers Japan K.K.), DIAION (manufactured by Mitsubishi Chemical Corporation), and Fumasep (manufactured by FUMATECH BWT GmbH).

An example of the anion exchange resin is a resin having one or more ion exchange groups selected from the group consisting of: a quaternary ammonium group; a primary amino group; a secondary amino group; and a tertiary amino group. A commercially available product may be used, and examples thereof include Sustainion (manufactured by Dioxide Materials), Fumasep (manufactured by FUMATECH BWT GmbH), PENTION (manufactured by Xergy Inc.), DURION (manufactured by Xergy Inc.), NEOSEPTA (manufactured by ASTOM Corporation), and TOYOPEARL (manufactured by Tosoh Corporation).

From the viewpoint of improving conductivity, the anion exchange resin has a basic site density in a dry state of preferably from 2.0 mmol/cm³ to 5.0 mmol/cm³, more preferably 2.5 mmol/cm³ or more and less than 4.5 mmol/cm³, still more preferably 2.9 mmol/cm³ or more and less than 4.5 mmol/cm³.

The basic site density of the anion exchange resin may be obtained from an integral value of a signal obtained by performing ¹H NMR measurement of the anion exchange resin.

In addition, the term "dry state" of the anion exchange resin means a state in which the anion exchange resin does not contain free water. For example, the anion exchange resin may be brought into a dry state by heating in a vacuum.

### (Solvent)

The solvent is used as a dispersion medium for the conductive substance, and a solvent that does not react with the conductive substance 2 and the binder resin is preferably used.

Specific examples thereof include an alcohol, water, toluene, and dimethylsulfoxide. Among them, an alcohol is preferred, and ethanol is more preferred.

The solvents may be used alone or as a mixture thereof.

In a mixed solution containing the conductive substance 2 and the binder resin, a ratio (a/r) between a mass (a) of the conductive substance 2 and a mass (r) of the binder resin is preferably from 1/1 to 10/1, more preferably from 2/1 to 8/1, still more preferably from 3/1 to 7/1.

When the metal is used as the conductive substance 2, the conductive substance 2 is preferably applied to the carbon fiber layer by vapor deposition or sputtering.

As described above, when the spraying method is adopted, it is preferred to spray the mixed solution containing the conductive substance 2 and the binder resin from the surface side of the carbon fiber layer, and when the vapor deposition or sputtering method is adopted, it is preferred to apply the conductive substance 2 from the surface side of the carbon fiber layer by vapor deposition or sputtering.

Next, the spraying method and the vapor deposition or sputtering method are described.

### (Spraying Method)

In the spraying method, for example, the mixed solution containing the conductive substance 2 and the binder resin is sprayed from the surface side of the carbon fiber layer.

Specifically, for example, through use of a spraying device as the application device C illustrated in Fig. 3, the mixed solution is sprayed from the spraying device to the surface of the carbon fiber layer. In the spraying of the mixed solution, it is preferred that the carbon fiber layer be heated to from 65°C to 85°C, and the mixed solution be mixed with pressurized air to be formed into a mist. In addition, in order to prevent the conductive substance 2 from spreading around to the surface of the carbon fiber layer on a catalyst layer side, a porous layer is preferably arranged on the surface of the carbon fiber layer on the catalyst layer side.

A solution containing the conductive substance 2 and the binder resin in the amounts [ratio (a/r)] described above may be used as the mixed solution.

The mixed solution is sprayed so that the total amount of the conductive substance 2 and the binder resin in the mixed solution is preferably from 0.05 mg/cm² to 2 mg/cm², more preferably from 0.10 mg/cm² to 1.50 mg/cm², still more preferably from 0.15 mg/cm² to 1.00 mg/cm² from the viewpoint of the balance among the conductivity, hydrophobicity, and gas diffusivity of the carbon fiber layer.

When the mixed solution is sprayed within the above-mentioned ranges, the total supported amount of the conductive substance 2 and the binder resin in the carbon fiber layer fall within ranges comparable to those of the total amount of the conductive substance 2 and the binder resin in the mixed solution.

### (Vapor Deposition or Sputtering Method)

In the vapor deposition or sputtering method, for example, the conductive substance 2 (in particular, the metal) is applied from the surface side of the carbon fiber layer by vapor deposition or sputtering.

When a cluster or an atom of the conductive substance 2 is deposited on part of the carbon fiber, conductivity can be imparted in the depth direction while the hydrophobicity and gas diffusivity of the carbon fiber layer are maintained.

Specifically, for example, a vapor deposition device or a sputtering device is used as the application device C illustrated in Fig. 3, and the conductive substance 2 is applied from the vapor deposition device or the sputtering device to the surface of the carbon fiber layer. In the application of the conductive substance 2, the inside of the device is preferably purged with a dilute inert gas (e.g., argon gas) to perform vapor deposition or sputtering.

The application amount of the conductive substance 2 is preferably from 0.5 µg/cm² to 5 µg/cm², more preferably from 0.7 µg/cm² to 4 µg/cm², still more preferably from 1 µg/cm² to 3 µg/cm² from the viewpoint of the balance among the conductivity, hydrophobicity, and gas diffusivity of the carbon fiber layer.

When the conductive substance 2 is applied within the above-mentioned ranges, the supported amount of the conductive substance 2 in the carbon fiber layer falls within ranges comparable to those of the application amount.

### [Gas Diffusion Layer]

The gas diffusion layer to be produced by the method of producing a gas diffusion layer according to this embodiment includes the carbon fiber layer and the porous layer.

### (Carbon Fiber Layer)

The carbon fiber layer to be used in the method of producing a gas diffusion layer according to this embodiment includes a carbon fiber.

Carbon paper or a nonwoven fabric may be used as the carbon fiber. Examples thereof include graphite carbon and glassy carbon.

The carbon fiber layer may further include a metal mesh of, for example, titanium or stainless steel (SUS), or may be formed of a carbon fiber.

It is preferred that the carbon fiber layer be free of a binder resin, that is, the content of the binder resin in the carbon fiber layer be 0 mass%.

### (Porous Layer)

The porous layer to be used in the method of producing a gas diffusion layer according to this embodiment includes the conductive substance 1 and the binder resin. The porous layer has a porous structure in which particles of the conductive substance are laminated in a state of having air gaps therebetween.

When the gas diffusion layer includes the porous layer in addition to the carbon fiber layer, the conductive substance 2 can be prevented from adhering to the surface of the gas diffusion layer adjacent to the catalyst layer while the conductivity and gas diffusivity of the gas diffusion layer are not impaired. The porous layer is preferably positioned between the carbon fiber layer and the catalyst layer. The porous layer may be only one layer, or may include two or more layers.

The porous layer preferably has a porosity of from 10% to 60% and an average pore diameter of from 10 nm to 500 nm. When the porosity is 10% or more, a gas diffusion speed is improved, and when the porosity is 60% or less, the supporting efficiency of the catalyst layer can be improved. In addition, when the average pore diameter is 10 µm or more, the gas diffusion speed is improved, and when the average pore diameter is 500 µm or less, the supporting efficiency of the catalyst layer can be improved.

The porosity of the porous layer is more preferably from 10% to 50%, still more preferably from 12% to 40%.

The average pore diameter of the porous layer is more preferably from 30 nm to 450 nm, still more preferably from 60 nm to 400 nm.

The porosity and average pore diameter of the porous layer may be measured by mercury porosimetry (JIS Z 8890:2017) or X-ray computed tomography (CT).

The conductive substance 2 and the binding material described as the components of the mixed solution to be used at the time of the application of the conductive substance 2 to the carbon fiber layer by the spraying method may be used as the conductive substance 1 and the binder resin.

That is, a carbon material and a metal may each be used as the conductive substance 1 included in the porous layer. The conductive substance 1 only needs to be a material that allows a gas to permeate therethrough, has conductivity, and can capture a nanoparticle. The conductive substance 1 may have a sheet shape such as a graphene sheet, or may have a mesh shape such as a titanium foam.

Among them, carbon black, activated carbon, graphite, a carbon nanotube, a carbon nanofiber, nanoporous carbon, aluminum, and titanium are each preferred as the conductive material 1, and carbon black and a carbon nanotube are each more preferred. The conductive substances 1 may be used alone or in combination thereof.

The content of the conductive substance 1 in the porous layer is preferably from 50 mass% to 99.9 mass%, more preferably from 70 mass% to 99 mass%. In addition, the content of the binder resin in the porous layer is preferably from 0.1 mass% to 50 mass%, more preferably from 1 mass% to 30 mass%.

A product that is commercially available as a gas diffusion layer in which the carbon fiber layer and the porous layer are laminated may be used as the porous layer.

The gas diffusion layer according to this embodiment produced as described above includes: the carbon fiber layer including the conductive substance 2 and the carbon fiber, part of the carbon fiber being covered with the conductive substance 2; and the porous layer including the conductive substance 1 and the binder resin.

The conductive substance 2 in the carbon fiber layer is applied to the inside of the carbon fiber layer in the depth direction as well as the surface of the carbon fiber layer by the method of producing a gas diffusion layer to be suitably used in this embodiment. In other words, the conductive substance 2 is present in the carbon fiber layer from the surface to the position of 60% or more of the thickness thereof in the depth direction. The term "surface of the carbon fiber layer" as used herein refers to a surface opposite to a surface adjacent to the porous layer, and means the surface 10b in each of Fig. 2 and Fig. 3.

The position at which the conductive substance 2 is present is preferably 70% or more, more preferably 80% or more of the thickness of the carbon fiber layer in the depth direction from the surface of the carbon fiber layer, and may be 100% thereof.

The extent of the position at which the conductive substance 2 is present in the depth direction from the surface of the carbon fiber layer may be determined through use of a scanning electron microscope and a dispersive fluorescent X-ray analyzer. Specifically, an image is obtained with the scanning electron microscope to identify a measurement site. A sample is irradiated with an electron beam and fluorescent X-rays emitted from the sample are spectrally analyzed with an X-ray spectrometer. It is only required to measure the distribution of detected count ratios of fluorescent X-rays of "element of conductive substance 2/C" or "binder resin/C" in the depth direction in the vicinity of an interface between the carbon fiber layer and the porous layer in the gas diffusion layer. The symbol "C" means carbon.

For example, the magnification of the electron microscope is set to from 100 times to 500 times, and the count ratio at each position in the vicinity of the interface between the carbon fiber layer and the porous layer is measured. When the layer thickness of the carbon fiber layer is, for example, 315 µm, the observation of the presence of the conductive substance from the interface to a position of about 20 µm toward the carbon fiber layer side determines that the conductive substance is present in the carbon fiber layer from the surface to a position of 90% or more of the thickness of the carbon fiber layer in the depth direction.

For example, when Ag serving as the conductive substance 2 is applied to the carbon fiber layer by the vapor deposition or sputtering method, the distribution in the depth direction of detected count ratios of fluorescent X-rays of Ag/C in the vicinity of the interface between the carbon fiber layer and the porous layer is measured.

In addition, for example, when the mixed solution containing the conductive substance 2 and the binder resin is sprayed on the carbon fiber layer by the spraying method using an ionomer having a sulfo group (S) as the binder resin, the distribution in the depth direction of detected count ratios of fluorescent X-rays of S/C in the vicinity of the interface between the carbon fiber layer and the porous layer is measured.

For example, the position of the conductive substance 2 present in the carbon fiber layer may be determined by creating a graph having the count ratio of Ag/C or S/C on the vertical axis, and the position of the detection target (Ag or S) on the horizontal axis. A larger count ratio means that a larger amount of the conductive substance 2 is present at each position in the carbon fiber layer.

When part of the carbon fiber is covered with the conductive substance 2 and the conductive substance 2 is present in even the inside in the depth direction, the gas diffusion layer has high conductivity in the depth direction.

At least part of the surface of the carbon fiber only needs to be covered with the conductive substance 2, or the entire surface may be covered with the conductive substance 2. The degree of coverage of the carbon fiber with the conductive substance 2 may be determined with an electron microscope.

### <Cathode>

A cathode according to an embodiment of the present disclosure includes: a gas diffusion layer produced by the method of producing a gas diffusion layer according to the embodiment of the present disclosure, the gas diffusion layer including: a carbon fiber layer including a conductive substance 2 and a carbon fiber, part of the carbon fiber being covered with the conductive substance 2; and a porous layer including a conductive substance 1 and a binder resin; and a catalyst layer arranged on a porous layer side of the gas diffusion layer.

More specifically, the cathode according to this embodiment includes: a gas diffusion layer including: a carbon fiber layer including a conductive substance 2 and a carbon fiber, part of the carbon fiber being covered with the conductive substance 2, the conductive substance 2 being present in the carbon fiber layer from a surface thereof to a position of 60% or more thereof in a depth direction; and a porous layer including a conductive substance 1 and a binder resin, the porous layer having a porosity of from 10% to 60% and an average pore diameter of from 10 nm to 500 nm; and a catalyst layer arranged on a porous layer side of the gas diffusion layer.

Methods of determining the degree of coverage of the carbon fiber with the conductive substance 2 and the position at which the conductive substance 2 is present in the carbon fiber layer are as described above.

When the carbon fiber layer is produced by the spraying method in the method of producing a gas diffusion layer according to the embodiment of the present disclosure, the carbon fiber layer further includes a binder resin, the supported amount of the conductive substance 2 and the binder resin in the carbon fiber layer is preferably from 0.05 mg/cm² to 2 mg/cm² from the viewpoint of the balance among the conductivity, hydrophobicity, and gas diffusivity of the carbon fiber layer. From the same viewpoint, the supported amount of the conductive substance 2 and the binder resin in the carbon fiber layer when produced by the spraying method is more preferably from 0.10 mg/cm² to 1.50 mg/cm², still more preferably from 0.15 mg/cm² to 1.00 mg/cm².

When the carbon fiber layer is produced by the vapor deposition or sputtering method in the method of producing a gas diffusion layer according to this embodiment, the supported amount of the conductive substance 2 in the carbon fiber layer is preferably from 0.5 µg/cm² to 5 µg/cm² from the viewpoint of the balance among the conductivity, hydrophobicity, and gas diffusivity of the carbon fiber layer. From the same viewpoint, the supported amount of the conductive substance 2 in the carbon fiber layer when produced by the vapor deposition or sputtering method is more preferably from 0.7 µg/cm² to 4 µg/cm², still more preferably from 1 µg/cm² to 3 µg/cm².

The gas diffusion layer to be produced by the method of producing a gas diffusion layer according to this embodiment may be applied to, for example, a water electrolysis device, or a gas diffusion electrode for a fuel cell or an air cell in addition to the carbon dioxide reduction electrolysis device as described above. Similarly, the catalyst layer may be used in various batteries, electrodes, and the like in addition to a device for carbon dioxide reduction.

When a catalyst layer for carbon dioxide reduction is used as the catalyst layer, the cathode according to this embodiment includes the gas diffusion layer produced by the method of producing a gas diffusion layer according to this embodiment, and hence the supply of CO₂ to the catalyst layer is not reduced, and the electrolysis activity becomes excellent.

Details of the gas diffusion layer are as described in the description of the method of producing a gas diffusion layer. The catalyst layer is described below.

### [Catalyst Layer]

The catalyst layer according to this embodiment includes at least a catalyst, and may further include an ionomer.

The catalyst layer according to this embodiment is positioned on the porous layer side of the gas diffusion layer, in other words, positioned on the side of a surface of the porous layer opposite to the carbon fiber layer side in a laminate structure represented by "carbon fiber layer/porous layer/catalyst layer."

### (Catalyst)

The catalyst according to this embodiment includes carbon, and is preferably formed of a carrier on which an inorganic fine particle or a metal complex is supported.

In the catalyst in the technology of the present disclosure, a component that exhibits a catalytic action is an inorganic fine particle or a metal complex supported on the carrier, but in the technology of the present disclosure, the inorganic fine particle and the metal complex are each referred to as "catalyst source," and the carrier on which the catalyst source is supported is referred to as "catalyst".

### [Inorganic Fine Particle or Metal Complex]

The carrier according to this embodiment supports an inorganic fine particle or a metal complex as a catalyst source.

The inorganic fine particle and the metal complex are not particularly limited as long as the inorganic fine particle and the metal complex are each a component that exhibits a catalytic action. In the technology of the present disclosure, the term "inorganic fine particle" means a metal and an inorganic compound each having an average particle diameter measured by photographic observation or the like with a scanning electron microscope or the like of from 1 nm to 100 nm.

For example, when the catalyst source is used in a catalyst layer for a fuel cell, platinum, gold, nickel, ruthenium, rhodium, or the like may be used as a material for the inorganic fine particle, and a nickel complex, a cobalt complex, an iron complex, a manganese complex, a zinc complex, or the like may be used as the metal complex.

In addition, for example, when the catalyst source is used in a catalyst layer for a secondary battery electrode, platinum, gold, nickel, iridium, a metal oxide, or the like may be used as a material for the inorganic fine particle, and a nickel complex, a cobalt complex, an iron complex, a manganese complex, a zinc complex, or the like may be used as the metal complex.

When the catalyst layer is used as the catalyst layer for carbon dioxide reduction, a catalyst source having an action of generating at least carbon monoxide by a reduction reaction is preferably used as each of the inorganic fine particle and the metal complex.

Specifically, the inorganic fine particle for carbon dioxide reduction is preferably a fine particle of a material selected from the group consisting of: gold; silver; copper; nickel; iron; cobalt; zinc; chromium; palladium; tin; manganese; aluminum; indium; bismuth; molybdenum; and carbon nitride. The inorganic fine particles may be used alone or in combination thereof.

Among them, silver, gold, zinc, tin, copper, and bismuth are each preferred as the material for the inorganic fine particle from the viewpoint of the reaction efficiency of a carbon dioxide reduction reaction, silver, gold, copper, and tin are each more preferred, and silver, gold, and copper are each still more preferred.

The average particle diameter of the inorganic fine particle serving as a catalyst source for carbon dioxide reduction is preferably 65 nm or less, preferably 60 nm or less, preferably 50 nm or less, preferably 40 nm or less, preferably 30 nm or less from the viewpoint of the reaction speed of a carbon dioxide reduction reaction. In addition, the lower limit value of the average particle diameter is not limited, but is preferably 1 nm or more, more preferably 5 nm or more from the viewpoint of ease of production.

The average particle diameter may be measured by photographic observation or the like with a scanning electron microscope or the like.

The metal complex serving as a catalyst source for carbon dioxide reduction is a metal complex in which a ligand is coordinated to a metal or an ion of the metal, and the metal ion is preferably selected from the group consisting of: copper; nickel; iron; cobalt; zinc; manganese; molybdenum; and aluminum.

Among them, nickel, cobalt, iron, copper, zinc, and manganese are each preferred as the metal from the viewpoint of the reaction efficiency of a carbon dioxide reduction reaction, nickel, cobalt, iron, and copper are each more preferred, and nickel, cobalt, and iron are each still more preferred. The metal complex may contain only one kind of metal or ion of the metal, or two or more kinds thereof.

The kind of the ligand is not particularly limited, and examples of the metal complex include a phthalocyanine complex, a porphyrin complex, a pyridine complex, a metal-supported covalent triazine framework, and a metal organic framework. Among them, a phthalocyanine complex, a porphyrin complex, a pyridine complex, and a metal-supported covalent triazine framework are preferred, a phthalocyanine complex, a porphyrin complex, and a metal-supported covalent triazine framework are more preferred, and a porphyrin complex and a metal-supported covalent triazine framework are still more preferred. The metal complex may contain only one kind of ligand, or two or more kinds thereof.

The inorganic fine particle and the metal complex are each supported on the carrier according to this embodiment by performing a known method, such as vapor deposition, precipitation, adsorption, deposition, adhesion, welding, physical mixing, or spraying.

In addition, the catalyst in the technology of the present disclosure is preferably covered with an ionomer. When the catalyst is covered with the ionomer, an ion conductive channel between the covered catalyst and a solid electrolyte to be described later is easily formed to facilitate the movement of an ion generated by the reaction, and thus the electrolysis efficiency can be improved.

### [Ionomer]

The catalyst layer may further include the ionomer.

The ionomer functions as a binder resin in the catalyst layer, is a matrix resin (continuous phase) capable of dispersing and fixing the additive and the catalyst according to this embodiment, and also has a function to transfer an ion generated by electrolysis to improve the electrolysis efficiency of CO₂.

The binding material described as the component of the mixed solution to be used at the time of the application of the conductive substance to the carbon fiber layer by the spraying method may be used as the ionomer, and the ionomer is preferably an anion exchange resin.

When the cathode according to this embodiment is used in each of an ion exchange membrane-electrode assembly and a solid electrolyte type electrolysis device to be described later, from the viewpoint of improving conductivity, the same resin as that of a solid electrolyte (ion exchange membrane) is preferably used as the ionomer.

### [Carrier]

The carrier according to this embodiment is not particularly limited, but from the viewpoint of imparting conductivity, the carrier preferably contains carbon.

Carbon generally has conductivity, and hence the carrier containing carbon is a conductive carrier.

The carrier containing carbon is not limited as long as the carrier is a conductive material that may be used as a gas diffusion layer in an electrode included in a device for reducing carbon dioxide, and examples thereof include carbons, such as carbon black (e.g., furnace black, acetylene black, ketjen black, or medium thermal carbon black), activated carbon, graphite, a carbon nanotube, a carbon nanofiber, a carbon nanohorn, a graphene nanoplatelet, and nanoporous carbon. Among them, carbon black is preferred from the viewpoint of improving an active site density.

From the viewpoints of improving an active site density and improving a current density, the primary particle diameter of the carbon black is preferably from 5 nm to 200 nm, more preferably from 10 nm to 100 nm, still more preferably from 10 nm to 50 nm. The primary particle diameter of the carbon black may be measured with a transmission electron microscope. The primary particle diameter may be measured by measuring the length in the longest direction of each particle observed with the microscope as a long diameter to calculate an average value of the resultant long diameters.

From the same viewpoints, the secondary particle diameter (particle diameter of an aggregate) of the carbon black is preferably small, and carbon black having a large amount of functional groups is preferred.

Carbon black may be a commercially available product, and examples thereof include Vulcan (trademark) XC-72 (manufactured by Cabot Corporation) and BLACK PEARLS 2000 (manufactured by Cabot Corporation).

The carriers may be used alone or in combination thereof.

The content of the catalyst according to this embodiment in the catalyst layer is preferably from 5 mass% to 90 mass%, more preferably from 10 mass% to 80 mass%, still more preferably from 15 mass% to 60 mass% from the viewpoint of further improving the production efficiency of a synthesis gas containing CO.

### <Ion Exchange Membrane-Electrode Assembly>

An ion exchange membrane-electrode assembly according to an embodiment of the present disclosure includes the cathode according to the embodiment of the present disclosure described above, a solid electrolyte, and an anode.

The ion exchange membrane-electrode assembly according to this embodiment includes the cathode including the gas diffusion layer produced by the method of producing a gas diffusion layer of the present disclosure, and hence has high electrolysis activity and a high reduction reaction speed of CO₂.

As illustrated in Fig. 1, the ion exchange membrane-electrode assembly according to this embodiment has a PEM type structure in which the solid electrolyte 30 is sandwiched between the catalyst layer 20 and the anode 40, and the catalyst layer 20 includes a plurality of catalysts 24 according to this embodiment and an ionomer 22. In addition, a combination of a surface of the catalyst layer 20 opposite to a contact surface with the solid electrolyte 30 with the gas diffusion layer 10 forms the cathode according to this embodiment.

As illustrated in Fig. 1, carbon dioxide (CO₂) is supplied from the surface 10b side of the gas diffusion layer 10 to the catalyst layer 20, and carbon monoxide (CO) is generated by a reduction reaction.

The following description is given with the reference symbols in Fig. 1 being omitted.

### [Solid Electrolyte]

The ion exchange membrane-electrode assembly according to this embodiment includes a solid electrolyte.

A polymer membrane may be used as the solid electrolyte. Various ionomers may each be used as a polymer. The polymer may be a cation exchange resin or an anion exchange resin, but is preferably an anion exchange resin. That is, the solid electrolyte is preferably an anion exchange membrane. In addition, the same anion exchange resin as the ionomer to be used in the above-mentioned catalyst layer is more preferably used.

A product that is commercially available as a cation exchange membrane or an anion exchange membrane may be used as the solid electrolyte.

In addition, when an anion exchange membrane is used as the solid electrolyte, the anion exchange membrane has a basic site density in a dry state of preferably from 0.5 mmol/cm³ to 5.0 mmol/cm³, more preferably 2.5 mmol/cm³ or more and less than 4.5 mmol/cm³, still more preferably 2.9 mmol/cm³ or more and less than 4.5 mmol/cm³.

For example, a strongly acidic cation exchange membrane having a sulfone group introduced into a fluororesin base, Nafion 117, Nafion 115, Nafion 212, or Nafion 350 (manufactured by The Chemours Company), a strongly acidic cation exchange membrane having a sulfone group introduced into a styrene-divinylbenzene copolymer base, or NEOSEPTA CSE (manufactured by ASTOM Corporation) may be used as the cation exchange membrane.

An example of the anion exchange membrane is an anion exchange membrane having one or more ion exchange groups selected from the group consisting of: a quaternary ammonium group; a primary amino group; a secondary amino group; and a tertiary amino group. Specific examples thereof include: NEOSEPTA (trademark) ASE, AHA, ACS, and AFX (manufactured by ASTOM Corporation); and SELEMION (trademark) AMVN, DSVN, AAV, ASVN, and AHO (manufactured by AGC Inc.).

The carbon dioxide reduction reaction, that is, the reduction reaction at the cathode according to this embodiment varies depending on the kind of the solid electrolyte. When a cation exchange membrane is used as the solid electrolyte, the reduction reactions of the following reaction formula (1) and reaction formula (2) occur, and when the anion exchange membrane is used as the solid electrolyte, the reduction reactions of the following reaction formula (3) and reaction formula (4) occur.

CO₂+2H⁺+2e⁻→CO+H₂O (1)

2H⁺+2e⁻→H₂ (2)

H₂O+CO₂+2e⁻→CO+2OH⁻ (3)

2H₂O+2e⁻→H₂+2OH⁻ (4)

### [Anode]

The oxidation reaction at the anode varies depending on the kind of the solid electrolyte. When a cation exchange membrane is used as the solid electrolyte, the oxidation reaction of the following reaction formula (5) occurs, and when the anion exchange membrane is used as the solid electrolyte, the oxidation reaction of the following reaction formula (6) occurs.

2H₂O→O₂+4H⁺+4e⁻ (5)

4OH⁻→O₂+2H₂O+4e⁻ (6)

The anode is a gas diffusion electrode including the gas diffusion layer.

For example, the gas diffusion layer includes a metal mesh. Examples of an electrode material for the anode may include Ir, IrO₂, Ru, RuO₂, Co, CoOₓ, Cu, CuOₓ, Fe, FeOₓ, FeOOH, FeMn, Ni, NiOₓ, NiOOH, NiCo, NiCe, NiC, NiFe, NiCeCoCe, NiLa, NiMoFe, NiSn, NiZn, SUS, Au, and Pt.

### <Solid Electrolyte Type Electrolysis Device>

A solid electrolyte type electrolysis device according to an embodiment of the present disclosure includes the cathode according to the embodiment of the present disclosure described above, an anode forming a pair of electrodes with the cathode, a solid electrolyte interposed between the cathode and the anode in a contact state, and a voltage application unit that applies a voltage between the cathode and the anode.

The solid electrolyte type electrolysis device according to this embodiment includes the cathode including the gas diffusion layer produced by the method of producing a gas diffusion layer of the present disclosure, and hence has high electrolysis activity and a high reduction reaction speed of CO₂.

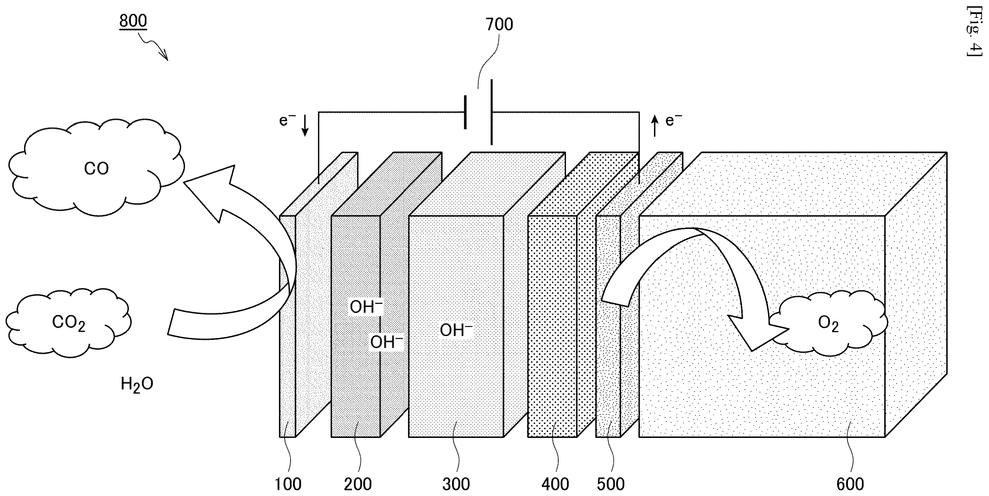

Fig. 4 is a schematic view of a solid electrolyte type electrolysis device to be suitably used in this embodiment.

In Fig. 4, there is illustrated a solid electrolyte type electrolysis device 800 including a cathode 200 according to this embodiment, an anode 400 forming a pair of electrodes with the cathode 200, a solid electrolyte 300 interposed between the cathode 200 and the anode 400 in a contact state, and a voltage application unit 700 that applies a voltage between the cathode 200 and the anode 400.

The solid electrolyte type electrolysis device 800 illustrated in Fig. 4 further includes a cathode collector plate 100, an anode collector plate 500, and an electrolyte solution 600.

The above-mentioned cathode according to this embodiment is used as the cathode 200. In addition, the solid electrolyte 300 is the same as the solid electrolyte 30 in Fig. 1, and the solid electrolyte 300 is preferably an anion exchange membrane. The anode 400 is the same as the anode 40 in Fig. 1.

Details of the cathode 200, the solid electrolyte 300, and the anode 400 are as described above.

The respective elements except the cathode 200, the solid electrolyte 300, and the anode 400 are described below with the reference symbols being omitted.

### [Cathode Collector Plate]

Examples of a material for the cathode collector plate include metal materials, such as copper (Cu), nickel (Ni), stainless steel (SUS), nickel-plated steel, and brass. Among them, copper is preferred from the viewpoints of easy workability and cost. When the material for the cathode collector plate is a metal material, the shape thereof is, for example, metal foil, a metal plate, a metal thin film, an expanded metal, a punched metal, or a foam meal.

A gas supply hole for supplying a raw material gas containing carbon dioxide to the cathode and a gas recovery hole for recovering a generated gas containing carbon monoxide may be formed in the cathode collector plate. When the cathode collector plate has the gas supply hole and the gas recovery hole, the raw material gas can be sent to the cathode uniformly and efficiently, and the generated gas (containing an unreacted raw material gas) can be discharged. Only one or two or more gas supply holes and only one or two or more gas recovery holes may be formed independently of each other. In addition, the shape, location, size, and the like of each of the gas supply hole and the gas recovery hole are not limited and are appropriately set. In addition, when the cathode collector plate has gas permeability, the gas supply hole and the gas recovery hole are not necessarily required.

When the cathode serves to transfer electrons, the cathode collector plate is not necessarily required.

### [Anode Collector Plate]

It is preferred that the anode collector plate have electric conductivity in order to receive electrons from the anode, and rigidity for supporting the anode. From such viewpoints, a metal material, such as titanium (Ti), copper (Cu), nickel (Ni), stainless steel (SUS), nickel-plated steel, or brass, may be suitably used for the anode collector plate.

A gas flow passage for sending a raw material gas (e.g., H₂O) to the anode may be formed in the anode collector plate. When the anode collector plate has the gas flow passage, a raw material gas can be sent to the anode uniformly and efficiently. The number, shapes, locations, sizes, and the like of the gas flow passages are not limited and are appropriately set.

### [Voltage Application Unit]

The voltage application unit serves to apply a voltage between the cathode and the anode through application of a voltage to the cathode collector plate and the anode collector plate. Here, both the collector plates are conductors, and hence receive electrons from the anode while supplying electrons to the cathode. In addition, a control unit (not shown) may be electrically connected to the voltage application unit in order to apply an appropriate voltage.

### [Electrolyte Solution]

The electrolyte solution is preferably an aqueous solution having a pH of 5 or more.

Examples thereof include an aqueous solution of a carbonate, an aqueous solution of a bicarbonate (e.g., an aqueous solution of KHCO₃), an aqueous solution of a sulfate, an aqueous solution of a borate, an aqueous solution of sodium hydroxide, an aqueous solution of potassium hydroxide, and an aqueous solution of sodium chloride.

### (Reaction Gas Supply Unit)

In the solid electrolyte type electrolysis device according to this embodiment, a reaction gas supply unit (not shown) may be arranged on the outside of the solid electrolyte type electrolysis device. That is, it is only required that CO₂ that is a reaction gas be supplied to the catalyst layer included in the cathode, and the reaction gas may be supplied from the reaction gas supply unit to a gas supply hole through, for example, a pipe (not shown), or the reaction gas supply unit may be arranged so that the reaction gas is blown to the surface of the cathode collector plate opposite to a contact surface with the cathode. In addition, a factory emission gas emitted from a factory is suitably used as the reaction gas from an environmental standpoint.

### [CO Generation Method]

Next, a CO generation method using the solid electrolyte type electrolysis device according to this embodiment is described.

First, CO₂ that is a reaction gas serving as a raw material is supplied to the solid electrolyte type electrolysis device in a gas phase state by the reaction gas supply unit (not shown). In this case, CO₂ is supplied to the cathode, for example, through the gas supply hole formed in the cathode collector plate.

Next, the CO₂ supplied to the cathode is brought into contact with the catalyst layer of the cathode. As a result, when a cation exchange membrane is used as the solid electrolyte, the reduction reactions of the reaction formula (1) and the reaction formula (2) described above occur, and when an anion exchange membrane is used as the solid electrolyte, the reduction reactions of the reaction formula (3) and the reaction formula (4) described above occur. Thus, a synthesis gas containing at least CO and H₂ is generated.

Next, the generated synthesis gas containing CO and H₂ is sent to a gas recovery device (not shown), for example, through the gas recovery hole formed in the cathode collector plate, and is recovered for each predetermined gas.

### Examples

Next, the technology of the present disclosure is specifically described by way of Examples. However, the technology of the present disclosure is not limited to these examples in any way.

### <Production of Gas Diffusion Layer>

### [Example 1]

A gas diffusion layer of Example 1 was produced by using a sputtering method. Specifically, the gas diffusion layer was produced as described below.

Pure Ag (99.99 mass%) was applied to the surface of a carbon fiber layer 1 with a porous layer opposite to the surface on which the porous layer was arranged through use of a magnetron sputtering device at a sputtering current of 20 mA so that the supported amount was 2 µg/cm². Thus, the gas diffusion layer of Example 1 was obtained.

Sputtering was performed by using a product available under the product name "JFC-1600" from JEOL Ltd. as the magnetron sputtering device under a state in which the inside of the device was purged with dilute Ar.

A product available under the product name "Sigracet (trademark) 39BB" from SGL Carbon was used as the carbon fiber layer 1 with a porous layer. The thickness of a carbon fiber layer part of the carbon fiber layer 1 is 315 µm. The porous layer has a porosity of from 15% to 30% and an average pore diameter of from 100 nm to 300 nm (catalog value).

### [Comparative Example 1]

A gas diffusion layer of Comparative Example 1 was produced by using a sputtering method. Specifically, the gas diffusion layer was produced as described below.

Pure Ag (99.99 mass%) was applied to a surface of a carbon fiber layer 2 free of a porous layer through use of a magnetron sputtering device (manufactured by JEOL Ltd., product name: "JFC-1600") under a state in which the inside of the device was purged with dilute Ar at a sputtering current of 20 mA so that the supported amount was 2 µg/cm². Thus, a gas diffusion layer of Reference Example 1 was obtained.

A product available under the product name "TGP-H-060" from Toray Industries, Inc. was used as the carbon fiber layer 2 free of a porous layer.

### [Example 2]

A gas diffusion layer of Example 2 was produced by using a spraying method. Specifically, the gas diffusion layer was produced as described below.

Carbon black having a primary particle diameter of 30 nm (conductive substance 2 according to this embodiment) and a binder resin 1 or a binder resin 2 were mixed so that the ratio (a/r) between the mass (a) of the conductive substance and the mass (r) of the binder resin became 5/1, and were dispersed in ethanol to prepare a mixed solution 1.

The mixed solution 1 in a state of being mixed with pressurized air and formed into a mist was applied from a spraying device to the surface of the carbon fiber layer 1 opposite to the surface adjacent to a porous layer under a state in which the carbon fiber layer 1 with a porous layer was heated to 75°C. The spraying of the mixed solution 1 was stopped at a time point when the supported amount of the conductive substance and the binder resin became 0.2 mg/cm². Thus, the gas diffusion layer of Example 2 was obtained.

A product available under the product name "Nafion (trademark) D521" from The Chemours Company was used as the binder resin 1. An external mixing type two-fluid nozzle (manufactured by Apeiros, product name: "LPVN (trademark) 10") was used as the spraying device.

### [Example 3]

A gas diffusion layer of Example 3 was produced in the same manner as in the production of the gas diffusion layer of Example 2 except that the spraying of the mixed solution 1 was stopped at a time point when the supported amount of the conductive substance and the binder resin became 0.6 mg/cm².

### [Example 4]

A gas diffusion layer of Example 4 was produced by using a spraying method. Specifically, the gas diffusion layer was produced as described below.

Carbon black having a primary particle diameter of 30 nm (conductive substance 2 according to this embodiment) and a binder resin 2 were mixed so that the ratio (a/r) between the mass (a) of the conductive substance and the mass (r) of the binder resin became 5/1, and were dispersed in ethanol to prepare a mixed solution 2.

The mixed solution 2 in a state of being mixed with pressurized air and formed into a mist was applied from a spraying device to a surface of the carbon fiber layer 1 opposite to a surface thereof on which the porous layer was arranged, under a state in which the carbon fiber layer 1 with a porous layer was heated to 75°C. The spraying of the mixed solution 2 was stopped at a time point when the supported amount of the conductive substance and the binder resin became 0.4 mg/cm². Thus, the gas diffusion layer of Example 4 was obtained.

A product available under the product name "Teflon (trademark) PTFE DISP 30" from The Chemours Company was used as the binder resin 2. An external mixing type two-fluid nozzle (manufactured by Apeiros, product name: "LPVN (trademark) 10") was used as the spraying device.

### [Comparative Example 2]

The carbon fiber layer 1 with a porous layer (manufactured by SGL Carbon, product name: "Sigracet (trademark) 39BB") was used as a gas diffusion layer of Comparative Example 2.

### [Comparative Example 3]

A gas diffusion layer of Comparative Example 3 was produced by using a liquid phase method. Specifically, the gas diffusion layer was produced as described below.

The carbon fiber layer 1 with a porous layer was immersed in the mixed solution 1 prepared in the production of the gas diffusion layer of Example 2, and a 0.8 mg/cm² mixture of a conductive substance and a binder resin was supported on the carbon fiber layer 1. Thus, the gas diffusion layer of Comparative Example 3 was obtained.

### <Measurement of Side Reaction Amount>

An anion exchange membrane having a thickness of about 30 µm, an iridium oxide-supported carbon anode (manufactured by Dioxide Materials) serving as an anode, and the gas diffusion layer of Example 1 or Comparative Example 1 serving as a cathode were bonded to each other to provide a membrane-electrode assembly.

In the anion exchange membrane, a fluorine-based resin (basic site density: 2.1 mmol/cm³) having an aromatic ring in a main chain and a quaternary ammonium group serving as a side chain bonded to the main chain was used as a base material. In addition, the anode had a structure in contact with an electrolyte solution vessel.

Pure CO₂ was supplied to the cathode with the device. The CO₂ was subjected to electrolysis with the application potential of the cathode being set to -2.6 V with respect to the anode under such a condition that the cell was heated to 80°C, and a current density [mA/cm²] for generating H₂ from H₂O as a side reaction was measured. The results are summarized in Table 1.

### [Table 1]

**Table 1**

| | Presence or absence of porous layer | H₂ generation partial current density [mA/cm²] |
|---|---|---|
| Example 1 | Present | 9 |
| Comparative Example 1 | Absent | 78 |

As shown in Table 1, it is understood that, when the conductive substance is applied to the carbon fiber layer with a porous layer (Example 1), a partial current density resulting from H₂ generation serving as a side reaction is significantly increased as compared to that when the carbon fiber layer is free of a porous layer (Comparative Example 1), and the generation amount of CO is decreased. It is understood that, in Comparative Example 1, while the conductive substance flows around to a surface of a gas diffusion electrode to act as an active site of the side reaction, the formation of the active site can be greatly suppressed because the carbon fiber layer is provided with a porous layer.

### <Measurement of Electrical Resistance of Gas Diffusion Electrode>

Each of the gas diffusion layers of Examples 1 to 4, and Comparative Examples 2 and 3 (geometric area: 2.25 cm²) was sandwiched between two gold electrodes, and under the application of a direct current of 100 mA/cm², a voltage drop between the gold electrodes was measured by using a four-terminal method. Thus, the electrical resistance of the electrode in a vertical direction was measured. The results are summarized in Table 2.

### [Table 2]

**Table 2**

| | Application method | Conductive substance | | Binder resin | Electrical resistance [mΩ/cm²] | Adhesion of conductive substance to surface of fine porous layer |
|---|---|---|---|---|---|---|
| | | Kind | Supported amount | Kind | | |
| Example 1 | Vapor phase method | Ag | 2 µg/cm² | None | 25±2 | Absent |
| Example 2 | Vapor phase method | Carbon black | 0.2 mg/cm² | Binder resin 1 | 32±2 | Absent |
| Example 3 | Vapor phase method | Carbon black | 0.6 mg/cm² | Binder resin 1 | 27±2 | Absent |
| Example 4 | Vapor phase method | Carbon black | 0.4 mg/cm² | Binder resin 2 | 29±2 | Absent |
| Comparative Example 2 | - | None | - | None | 124±11 | - |
| Comparative Example 3 | Liquid phase method | Carbon black | 0.8 mg/cm² | Binder resin 1 | 32±2 | Present |

As shown in Table 2, when Ag was applied (Example 1) to the carbon fiber layer with a porous layer by the vapor phase method, and when carbon black was applied thereto (Examples 2, 3, and 4), the electrical resistance was significantly decreased as compared to the case where Ag or carbon black was not applied (Comparative Example 2).

When carbon black is applied to the carbon fiber layer with a porous layer by the liquid phase method (Comparative Example 3), the electrical resistance was able to be reduced, but the conductive substance adhered to the surface of the porous layer. Accordingly, when a catalyst layer is arranged adjacent to the porous layer, such an adverse effect that the conductive substance acts as an active site of an unintended reaction (side reaction) may occur.

In addition, it is understood that the gas diffusion layer produced in each of Examples 1 to 4 has excellent conductivity in the depth direction because the conductive substance was able to uniformly reach the inside of the gas diffusion layer by supplying a fine particle of the conductive substance through use of each of the spraying method and the sputtering method.

### <Hydrophobicity Evaluation of Gas Diffusion Layer>

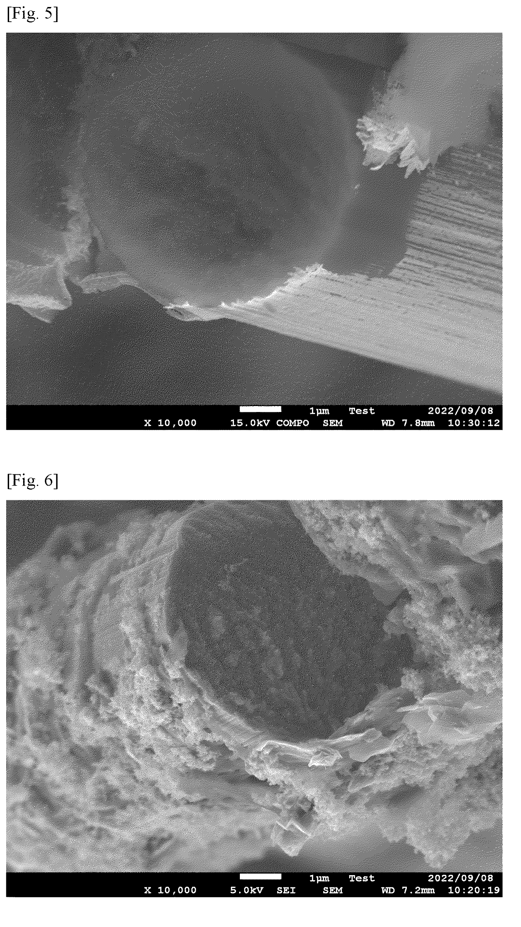

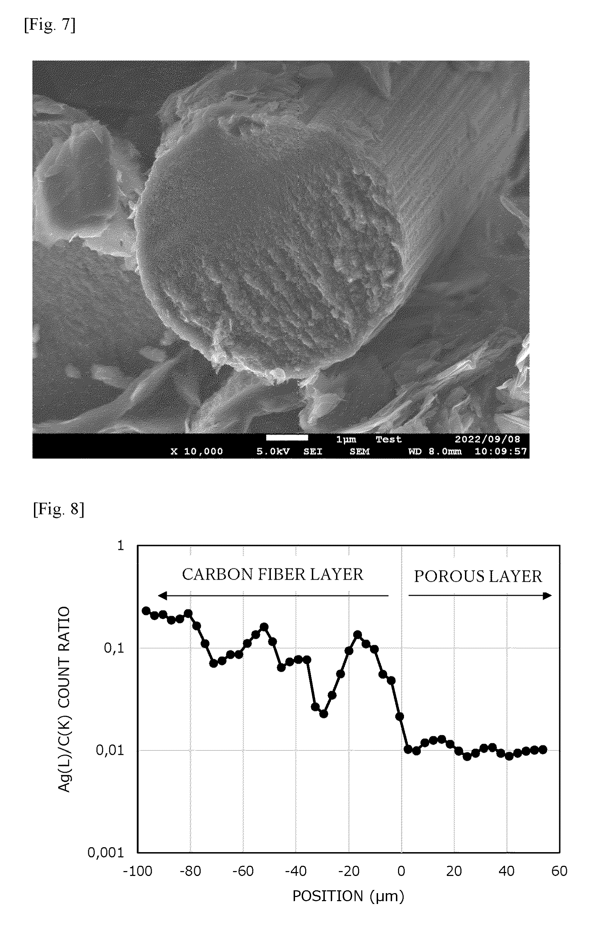

The cross-sectional electron micrographs of carbon fibers of the gas diffusion layers of Example 1, Example 2, and Comparative Example 2 were shown in Fig. 5, Fig. 6, and Fig. 7, respectively. Fig. 5 (Example 1) is a backscattered electron image, and Fig. 6 (Example 2) and Fig. 7 (Comparative Example 2) are each a secondary electron image.

As is understood from Fig. 5 to Fig. 7, it is understood that, in each of the gas diffusion layers of Example 1 (Fig. 5) and Example 2 (Fig. 6), part of the surface of the carbon fiber is covered with the conductive substance without embedding of an air gap inside the gas diffusion layer, and hence the porosity and the hydrophobicity by the carbon fiber are maintained.

The following is shown below the photograph of Fig. 5.

| | | | | | |
|---|---|---|---|---|---|
| 1 µm | Test | 2022/09/08 | | | |
| X 10,000 | | 15.0 kV COMPO | SEM | WD 7.8 mm | 10:30:12 |

The length of the white line corresponds to 1 µm.

The following is shown below the photograph of Fig. 6.

| | | | | | |
|---|---|---|---|---|---|
| 1 µm | Test | 20 | | | |
| X 10,000 | | 5.0 kV | SEI | SEM | WD 7.2 mm |

The length of the white line corresponds to 1 µm.

The following is shown below the photograph of Fig. 7.

| | | | | | | |
|---|---|---|---|---|---|---|
| 1 µm | Test | 2022/09/08 | | | | |
| X 10,000 | | 5.0 kV | SEI | SEM | WD 8.0 mm | 10:09:57 |

The length of the white line corresponds to 1 µm.

### <Evaluation of Position of Conductive Substance in Carbon Fiber Layer>

Under the following measurement conditions, the gas diffusion layer of Example 1 was measured for the distribution in the depth direction of detected count ratios of fluorescent X-rays of Ag/C in the vicinity of an interface between the carbon fiber layer and the porous layer, and the gas diffusion layer of Example 2 was measured for the distribution in the depth direction of detected count ratios of fluorescent X-rays of S/C in the vicinity of the interface between the carbon fiber layer and the porous layer.

### (Measurement Conditions)

Scanning electron microscope: field emission scanning electron microscope (model: JSM-7001F, manufactured by JEOL Ltd.)
Energy dispersive fluorescent X-ray analyzer: UltraDry (manufactured by Thermo Fisher Scientific)
Acceleration voltage: 15 kV

In the measurement of the gas diffusion layer of Example 1, the position of the conductive substance present in the carbon fiber layer was observed by creating a graph having a Ag/C count ratio on the vertical axis, and the position of the detection target (Ag) on the horizontal axis. The created graph is shown in Fig. 8. The magnification of the electron microscope was set to 500 times, and the count ratio at each position in the vicinity of the interface between the carbon fiber layer and the porous layer was measured.

In Fig. 8, the term "Ag(L)" in the "Ag(L)/C(K) count ratio" on the vertical axis means an L line of Ag, and the term "C(K)" therein means a K line of carbon. The "position (µm)" on the horizontal axis represents a distance from the interface in the depth direction (a positive value on a porous layer side) when the interface between the carbon fiber layer and the porous layer is defined as 0 µm.

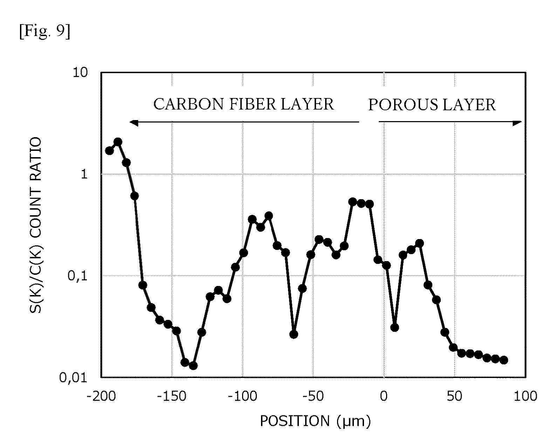

In the measurement of the gas diffusion layer of Example 2, the position of the conductive substance present in the carbon fiber layer was observed by creating a graph having a S/C count ratio on the vertical axis, and the position of the detection target (S) on the horizontal axis. The created graph is shown in Fig. 9. The magnification of the electron microscope was set to 300 times, and the count ratio at each position in the vicinity of the interface between the carbon fiber layer and the porous layer was measured.

In Fig. 9, the term "S(K)" in the "S(K)/C(K) count ratio" on the vertical axis means a K line of sulfur, and the term "C(K)" therein means a K line of carbon. The "position (µm)" on the horizontal axis represents a distance from the interface in the depth direction (a positive value on a porous layer side) when the interface between the carbon fiber layer and the porous layer is defined as 0 µm.

Fig. 8 shows the distribution in the depth direction of detected count ratios of fluorescent X-rays of Ag/C in the vicinity of the interface between the carbon fiber layer and the porous layer in the gas diffusion layer of Example 1, and Fig. 9 shows the distribution in the depth direction of detected count ratios of fluorescent X-rays of S/C in the vicinity of the interface between the carbon fiber layer and the porous layer in the gas diffusion layer of Example 2.

A larger count ratio means that a larger amount of the detection target is present at each position in the carbon fiber layer.

In the measurement of the gas diffusion layer of Example 1, Ag serving as a conductive substance is set as a detection target. A larger count ratio in Fig. 8 means that a larger amount of Ag is present at each position in the carbon fiber layer.

In the measurement of the gas diffusion layer of Example 2, a sulfo group in the binder resin 1 (manufactured by The Chemours Company, product name: "Nafion (trademark) D521") used as the binder resin is set as a detection target. A larger count ratio in Fig. 9 means that a larger amount of the sulfo group is present at each position in the carbon fiber layer. The gas diffusion layer of Example 2 is produced by spraying the mixed solution 1 containing the conductive substance and the binder resin on the surface of the carbon fiber layer 1. Accordingly, it is conceived that the conductive substance reaches the inside of the carbon fiber layer from the surface thereof in the depth direction together with the binder resin, and it is conceived that the conductive substance is also present at a position where the sulfo group is detected.

As is understood from Fig. 8, it was recognized that a large amount of the conductive substance was present in the gas diffusion layer of Example 1 from the interface between the carbon fiber layer and the porous layer to a position of about 20 µm toward the carbon fiber layer side (position of 90% or more of the thickness of the carbon fiber layer in the depth direction from the surface).

In addition, as is understood from Fig. 9, it was recognized that a large amount of the sulfo group was present in the gas diffusion layer of Example 2 from the interface between the carbon fiber layer and the porous layer to a position of about 10 µm toward the carbon fiber layer side (position of 90% or more of the thickness of the carbon fiber layer in the depth direction from the surface). Accordingly, it can be said that a large amount of the conductive substance is also present to a position of about 100% in the depth direction from the surface.

As described above, it was recognized that, although there were local variations in concentration, the conductive substance was present to the vicinity of the interface between the carbon fiber layer and the porous layer.

### <Production of Catalyst>

In a beaker, 1.1 mmol of pentaethylenehexamine and 0.7 mmol of nickel(II) chloride hexahydrate with respect to 0.4 g of a carbon black carrier (carrier according to this embodiment) having a primary particle diameter of 30 nm were mixed into 15 mL of ethanol to prepare an ethanol dispersion liquid.

After the resultant ethanol dispersion liquid was irradiated with ultrasonic waves for 10 minutes, the ethanol dispersion liquid was dried by heating to evaporate ethanol, to thereby provide a mixture. The resultant mixture was calcined by heating at 900°C for 10 seconds or more in an inert gas with a calcination furnace. After that, the product was washed with a sulfuric acid aqueous solution, and solid matter was recovered with a suction filter. The solid matter was vacuum-dried at 60°C overnight to provide Ni complex-supported catalyst powder (intermediate).

Further, 0.3 g of the resultant catalyst powder was placed in a pot together with 10 g of zirconia balls each having a diameter of 0.5 mm and 10 mL of water, and pulverized with a planetary ball mill device at a revolution number of 800 rpm for 20 minutes, and a catalyst slurry was recovered. The catalyst slurry was washed again with a sulfuric acid aqueous solution, solid matter was recovered with a suction filter. The recovered solid matter was vacuum-dried at 60°C overnight to provide final catalyst powder.

The primary particle diameter of carbon black was determined by laser diffraction particle size distribution measurement.

### <Production of Solid Electrolyte Type Electrolysis Device>

### [Example 5]

22 mg of the resultant catalyst powder was dispersed in ethanol, and 2 mg of "Nafion (trademark)" (cation exchange resin) manufactured by The Chemours Company was mixed as an ionomer into the dispersion liquid. After the mixing, the dispersion liquid was irradiated with ultrasonic waves for 10 minutes, and the dispersion liquid was exposed in a vacuum chamber under a reduced pressure environment of 10 kPa (absolute pressure) for 10 minutes.

After that, the dispersion liquid was applied to the surface on the porous layer side of the gas diffusion layer of Example 2 with a spray coater so that the supported amount at the time of drying was from 1 mg/cm² to 2 mg/cm². Thus, a cathode was obtained. The cathode includes the applied film of the dispersion liquid as the catalyst layer.

An ion exchange membrane A having a thickness of about 30 µm and an iridium oxide-supported carbon anode (manufactured by Dioxide Materials) were bonded to the resultant cathode to provide an ion exchange membrane-electrode assembly.

The ion exchange membrane A is an anion exchange membrane having a thickness of about 30 µm including, as a base material, a fluorine-based resin (basic site density: 2.1 mmol/cm³) having an aromatic ring in a main chain and a quaternary ammonium group serving as a side chain bonded to the main chain.

The anode had a structure in contact with an electrolyte solution (0.5 mol/L aqueous solution of KHCO₃) vessel.

### [Example 6]

A solid electrolyte type electrolysis device of Example 6 was produced in the same manner as in the production of the solid electrolyte type electrolysis device of Example 5 except that the gas diffusion layer of Example 4 was used instead of the gas diffusion layer of Example 2.

### [Example 7]

A solid electrolyte type electrolysis device of Example 7 was produced in the same manner as in the production of the solid electrolyte type electrolysis device of Example 5 except that the gas diffusion layer of Example 1 was used instead of the gas diffusion layer of Example 2.

### [Example 8]

A solid electrolyte type electrolysis device of Example 8 was produced in the same manner as in the production of the solid electrolyte type electrolysis device of Example 5 except that the ion exchange membrane B was used instead of the ion exchange membrane A.

The ion exchange membrane B is a product available under the product name "X37-50 grade 60" from Dioxide Materials, and has a structure including polystyrene as a main chain and having an imidazolium-based ion exchange group in a side chain.

### [Comparative Example 4]

A solid electrolyte type electrolysis device of Comparative Example 4 was produced in the same manner as in the production of the solid electrolyte type electrolysis device of Example 5 except that the gas diffusion layer of Comparative Example 2 was used instead of the gas diffusion layer of Example 2.

### [Comparative Example 5]

A solid electrolyte type electrolysis device of Comparative Example 5 was produced in the same manner as in the production of the solid electrolyte type electrolysis device of Comparative Example 4 except that the ion exchange membrane B was used instead of the ion exchange membrane A.

### [Comparative Example 6]

A solid electrolyte type electrolysis device of Comparative Example 6 was produced in the same manner as in the production of the solid electrolyte type electrolysis device of Example 5 except that the gas diffusion layer of Comparative Example 3 was used instead of the gas diffusion layer of Example 2.

### <Evaluation of Solid Electrolyte Type Electrolysis Device>

### [Examples 5 to 8 and Comparative Examples 4 to 6]

### (Current Density)

Through use of each of the solid electrolyte type electrolysis devices of Examples 5 to 8 and Comparative Examples 4 to 6, pure CO₂ at a flow rate of 100 sccm was supplied to the cathode.

The CO₂ was subjected to electrolysis with the application potential of the cathode being set to -2.6 V with respect to the anode under such a condition that the cells of the solid electrolyte type electrolysis devices of Examples 5 to 7, Comparative Example 4, and Comparative Example 6 each using the ion exchange membrane A, and the cells of the solid electrolyte type electrolysis devices of Example 8 and Comparative Example 5 each using the ion exchange membrane B were heated to 80°C and 70°C, respectively. A CO generation current density [mA/cm²] and a CO selectivity [%] at the time of the generation of CO were measured. The results are summarized in Table 3.

### [Table 3]

**Table 3**

| | Gas diffusion layer | Conductive substance | | Binder resin | Ion exchange membrane | Electrolytic characteristics | |
|---|---|---|---|---|---|---|---|
| | | Kind | Supported amount | Kind | | CO generation current density [mA/cm²] | CO selectivity |
| Example 5 | Gas diffusion layer of Example 2 | Carbon black | 0.2 mg/cm² | Binder resin 1 | A | 670 | 97% |
| Example 6 | Gas diffusion layer of Example 4 | Carbon black | 0.4 mg/cm² | Binder resin 2 | A | 610 | 98% |
| Example 7 | Gas diffusion layer of Example 1 | Ag | 2 µg/cm² | None | A | 630 | 99% |
| Example 8 | Gas diffusion layer of Example 2 | Carbon black | 0.2 mg/cm² | Binder resin 1 | B | 600 | 84% |
| Comparative Example 4 | Gas diffusion layer of Comparative Example 2 | None | - | None | A | 500 | 96% |
| Comparative Example 5 | Gas diffusion layer of Comparative Example 2 | None | - | None | B | 370 | 98% |
| Comparative Example 6 | Gas diffusion layer of Comparative Example 3 | Carbon black | 0.8 mg/cm² | Binder resin 1 | A | 210 | 84% |

As is understood from Table 3, as a result of the reduction in electrical resistance, a current density improvement effect at the time of constant voltage application was recognized. The same improvement effect was recognized when any of the two types of ion exchange membranes, that is, the ion exchange membranes A and B, was used.

### Industrial Applicability

According to this embodiment, a synthesis gas containing at least CO and H₂ at a desired generation ratio can be generated through use of renewable energy of a solar cell or the like to a voltage application unit, for example, with a CO₂ gas emitted from a factory being used as a raw material with respect to a solid electrolyte type electrolysis device. The synthesis gas thus generated can generate a fuel base material, a chemical raw material, or the like by a method, such as Fischer-Tropsch synthesis (FT synthesis) or methanation.

### Reference Signs List

10 gas diffusion layer
20 catalyst layer
22 ionomer
24 catalyst
30 solid electrolyte (ion exchange membrane)
40 anode
50 ion exchange membrane-electrode assembly
100 cathode collector plate
200 cathode
300 solid electrolyte (ion exchange membrane)
400 anode
500 anode collector plate
600 electrolyte solution
700 voltage application unit
800 solid electrolyte type electrolysis device

## Claims

1. A method of producing a gas diffusion layer comprising: a carbon fiber layer comprising a carbon fiber; and a porous layer comprising a conductive substance 1 and a binder resin,
the method comprising applying a conductive substance 2 from a surface side of the carbon fiber layer of a laminate comprising the carbon fiber layer and the porous layer by a spraying method or a vapor phase method.

2. The method of producing a gas diffusion layer according to claim 1, wherein the porous layer has a porosity of from 10% to 60% and an average pore diameter of from 10 nm to 500 nm.

3. The method of producing a gas diffusion layer according to claim 1 or 2, wherein the conductive substance 1 and the conductive substance 2 are each independently one or more selected from the group consisting of: a carbon material; and a metal.

4. The method of producing a gas diffusion layer according to any one of claims 1 to 3, wherein the method comprises spraying a mixed solution comprising the conductive substance 2 and the binder resin from the surface side of the carbon fiber layer.

5. The method of producing a gas diffusion layer according to claim 4, wherein the spraying the mixed solution is performed so that a total amount of the conductive substance 2 and the binder resin in the mixed solution becomes from 0.05 mg/cm² to 2 mg/cm².

6. The method of producing a gas diffusion layer according to any one of claims 1 to 3, wherein the applying the conductive substance 2 from the surface side of the carbon fiber layer is performed by vapor deposition or sputtering.

7. The method of producing a gas diffusion layer according to claim 6, wherein an application amount of the conductive substance 2 is from 0.5 µg/cm² to 5 µg/cm².

8. A cathode, comprising:
a gas diffusion layer produced by the method of producing a gas diffusion layer of any one of claims 1 to 7, the gas diffusion layer comprising: a carbon fiber layer comprising a conductive substance 2 and a carbon fiber, part of the carbon fiber being covered with the conductive substance 2; and a porous layer comprising a conductive substance 1 and a binder resin; and
a catalyst layer arranged on a porous layer side of the gas diffusion layer.

9. A cathode, comprising:
a gas diffusion layer comprising:
a carbon fiber layer comprising a conductive substance 2 and a carbon fiber, part of the carbon fiber being covered with the conductive substance 2, the conductive substance 2 being present in the carbon fiber layer from a surface thereof to a position of 60% or more thereof in a depth direction; and
a porous layer comprising a conductive substance 1 and a binder resin, the porous layer having a porosity of from 10% to 60% and an average pore diameter of from 10 nm to 500 nm; and
a catalyst layer arranged on a porous layer side of the gas diffusion layer.

10. The cathode according to claim 8 or 9,
wherein the carbon fiber layer further comprises a binder resin, and
wherein a supported amount of the conductive substance 2 and the binder resin is from *0.05* mg/cm² to 2 mg/cm².

11. The cathode according to any one of claims 8 to 10, wherein the conductive substance 1 and the conductive substance 2 are each independently one or more selected from the group consisting of: a carbon material; and a metal.

12. An ion exchange membrane-electrode assembly, comprising:
the cathode of any one of claims 8 to 11;
a solid electrolyte, and
an anode.

13. The ion exchange membrane-electrode assembly according to claim 12, wherein the solid electrolyte is an anion exchange membrane.

14. A solid electrolyte type electrolysis device, comprising:
the cathode of any one of claims 8 to 11;
an anode forming a pair of electrodes with the cathode;
a solid electrolyte interposed between the cathode and the anode in a contact state; and
a voltage application unit configured to apply a voltage between the cathode and the anode.

15. The solid electrolyte type electrolysis device according to claim 14, wherein the solid electrolyte is an anion exchange membrane.
